Europäisches Patentamt

European Patent Office

Office européen des brevets

(11) Numéro de publication : **0 277 055 B1**

## (12) FASCICULE DE BREVET EUROPEEN

(45) Date de publication du fascicule du brevet :
03.06.92 Bulletin 92/23

(51) Int. Cl.$^5$ : **F16K 31/10, F16K 31/56, F16K 7/16**

(21) Numéro de dépôt : **88400045.6**

(22) Date de dépôt : **11.01.88**

(54) **Microélectrovanne de commutation à une seule membrane.**

(30) Priorité : **12.01.87 FR 8700209**

(43) Date de publication de la demande :
**03.08.88 Bulletin 88/31**

(45) Mention de la délivrance du brevet :
**03.06.92 Bulletin 92/23**

(84) Etats contractants désignés :
**AT BE CH DE ES FR GB IT LI LU NL SE**

(56) Documents cités :
**EP-A- 0 250 298**
**CH-A- 481 335**
**DE-A- 3 503 357**

(56) Documents cités :
**DE-U- 7 324 333**
**FR-A- 2 223 605**
**US-A- 2 562 631**
**US-A- 2 935 086**

(73) Titulaire : **ABX**
**16 rue Baudin**
**F-92300 Levallois-Perret (FR)**

(72) Inventeur : **Champseix, Serge**
**29 bis, rue des Puiseux**
**F-78130 Les Mureaux (FR)**

(74) Mandataire : **Lepeudry-Gautherat, Thérèse (FR) et al**
**Cabinet Lepeudry 52, avenue Daumesnil**
**F-75012 Paris (FR)**

## Description

L'invention qui concerne une microélectrovanne de commutation destinée à tous fluides et particulièrement à des liquides agressifs ou chargés d'impuretés, a plus précisément pour objet une microélectrovanne à basculeur et une seule membrane.

On sait que les vannes deux ou trois voies manuelles ou motorisées ont pour objet de fermer le passage d'un fluide dans un conduit ou d'orienter un fluide d'un conduit d'alimentation vers l'un ou l'autre de deux conduits de distribution. Pour cela le corps de vanne auquel aboutissent ces conduits est habituellement muni d'un ensemble mobile qui, selon sa position ouvre ou ferme un orifice. Dans une vanne trois voies, l'ensemble mobile obture un orifice en en ouvrant un autre et inversement, et il est par exemple constitué d'une palette pivotant portant un élément souple d'étanchéité, ou encore d'un clapet obturateur à deux faces se déplaçant en translation dans un boîtier entre deux orifices opposés. Ces ensembles, surtout s'ils sont manoeuvrés par un moteur ou - comme c'est le cas habituel dans les électrovannes, par un électro-aimant -, doivent être soigneusement réalisés pour que l'étanchéité soit correcte, même après des fréquentes utilisations. Cela implique bien souvent des systèmes de réglages complémentaires associés à des ressorts de rappel, toutes dispositions qui compliquent le produit et l'alourdissent. Si cela n'a pas trop d'importance pour des utilisations courantes, quand il s'agit par exemple d'orienter de l'eau à pression normale d'un conduit principal vers un conduit de dérivation, il n'en est pas du tout de même dans certains domaines d'utilisation, comme dans le domaine médical, ou des électrovannes classiques ne peuvent être utilisées. Dans ce cas d'application en effet, on ne peut courir le risque que les liquides concernés puissent fuir de l'électovanne, ou qu'inversement ils puissent être atteints ou pollués par un milieu extérieur quel qu'il soit. D'autre part les microvannes recherchées doivent souvent être de petites tailles, être légères, et susceptibles d'être manoeuvrées par un électro-aimant de faible puissance.

Pour résoudre ces problèmes, on connaît la solution qui consiste à utiliser un organe obturateur qui utilise deux membranes en matière plastique, montées de part et d'autre d'un noyau qui traverse un puits central prévu dans le corps de l'électrovalve. Ces membranes qui sont souples peuvent se déformer dans leur boîtier et fermer des orifices qui y débouchent, tout en ouvrant d'autres orifices, et cela sous l'action du noyau d'un électroaimant. On sait ainsi réaliser une microvanne telle que décrite dans le EP-A-0 250 298 au nom de la Demanderesse, capable de tenir à des pressions relativement importantes bien que de dimension réduite, et qui se prête au transfert de tous liquides.

Les microvannes de ce type mettent toutefois en oeuvre - du fait de l'existence des deux membranes - deux boîtiers d'admission ou de départ de fluide, et un dispositif de liaison étanche entre les deux, l'ensemble membrane-liaison constituant un équipage mobile unique, entraîné par le même noyau. Cela impose la réalisation de plusieurs pièces de petites dimensions, dont l'assemblage est délicat, et le réglage difficile pour que les fermetures des membranes sur leur siège soient constantes. De plus le volume mort de fluide subsistant dans les boîtiers de chaque membrane, n'est de ce fait pas négligeable, ce qui peut présenter un inconvénient pour le transfert de très petits débits de fluide.

Pour éviter cela, on a pensé à réaliser une vanne à une seule membrane.

On connaît ainsi par le DE-A-3 503 357 une vanne utilisant une membrane unique comme organe obturateur de deux conduits. Mais cette membrane susceptible d'occuper une position de repos intermédiaire à ses deux positions d'obturation est solidaire d'une tige verticale servant à la manoeuvre de l'obturateur à partir d'un bouton.

Pour une utilisation avec tous fluides et particulièrement les liquides agressifs ou chargés d'impuretés, la microvanne proposée par l'invention permet d'éviter les inconvénients inhérents aux vannes précédemment mentionnées et présente l'avantage d'être plus simple à réaliser en même temps que d'un fonctionnement beaucoup plus fiable.

Un objet de la présente invention concerne donc une microélectrovanne de commutation à au moins deux voies comportant un corps de vanne dans une alvéole duquel aboutissent des conduits d'arrivée et de départ de fluide et un organe mobile constitué d'une membrane unique déformable jouant le rôle d'obturateur de l'un ou l'autre de ces conduits et manoeuvré par le noyau d'un électro-aimant, microélectrovanne selon laquelle un basculeur pivotant autour d'un point de pivotement disposé au centre de la membrane unique applique ladite membrane grâce à un ressort contre l'un ou contre l'autre de deux conduits et selon laquelle le basculeur est déplacé de l'une à l'autre de ses deux seules positions d'équilibre correspondant aux deux positions d'obturation de la membrane par un tiroir de commande coulissant sous l'action du noyau de l'électroaimant, lequel tiroir de commande étant placé dans un puits traversant le corps de vanne selon son axe longitudinal, une de ses extrémités affleurant à un orifice de sortie, non obturé, dudit puits, et sa partie centrale comportant une ouverture qui la traverse sur toute son épaisseur parallèlement à son axe.

Avantageusement la partie centrale du tiroir est taillée selon un plan perpendiculaire au plan de l'ouverture pour former un méplat entre l'axe et une génératrice du tiroir, deux encoches étant prévues transversalement au méplat et en son centre.

Selon une autre caractéristique de l'invention un flasque profilé qui ferme une ouverture cylindrique prévue sur une face latérale du corps de vanne et qui est traversé par trois petits conduits d'alimentation ou de départ de fluide, a un profil en forme de cuvette dont la partie centrale de profil conique reçoit une bille.

Selon encore une autre caractéristique de l'invention la basculeur à la forme générale d'une toupie, dont la face inférieure conique est en appui sur la face supérieure de la membrane sous l'action d'un ressort et pivote sur la bille prévue sur le flasque, et dont la partie supérieure comporte une tige qui s'engage dans l'ouverture prévue sur le tiroir.

Une disposition avantageuse de l'invention consiste en ce que la face conique du basculeur dispose d'une alvéole centrale permettant son positionnement sur la bille, et en ce que ledit basculeur comporte du côté opposé à sa face conique, une traverse destinée à se loger dans les encoches du tiroir.

D'autres caractéristiques particulières et avantages de l'invention ressortiront de la description qui va suivre d'une forme de réalisation prise à titre d'exemple non limitatif dans laquelle il est fait référence aux dessins qui représentent.

Figure 1 une vue schématique en coupe de la microélectrovanne en position de repos.

Figure 2 une vue en perspective du tiroir de commande.

Figure 3 une vue en perspective du basculeur.

Figure 4 une vue schématique en coupe de la microélectrovanne en position travail.

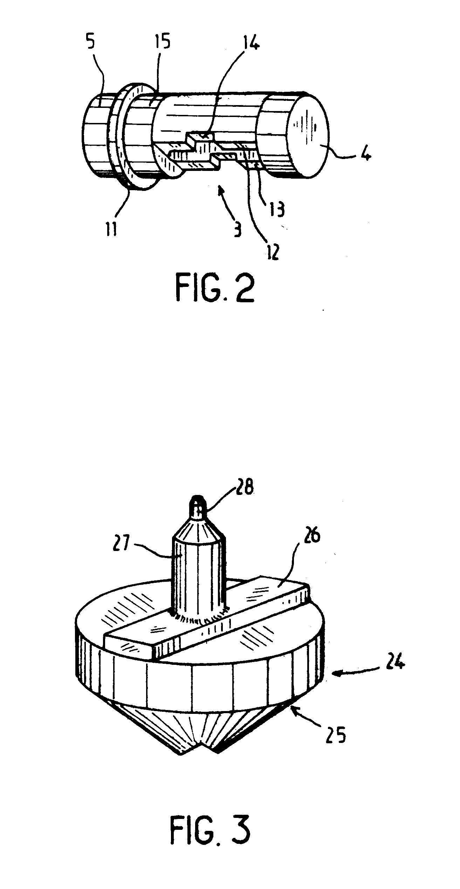

La microélectrovanne représentée sur les dessins a la forme générale d'un boîtier rectangulaire en matière plastique qui constitue le corps de vanne 1. Il est traversé selon son axe longitudinal AA' d'un puits 2 de forme cylindrique à l'intérieur duquel est placé un tiroir de commande 3 également visible à la figure 2. Une extrémité cylindrique 4 du tiroir coulisse dans le corps de vanne et affleure à un orifice de sortie non obturé du puits 2. L'extrémité opposée 5 du tiroir affleure également l'autre orifice de sortie du puits 2 par ailleurs fermé par une pièce de raccordement 6 vissée au corps de vanne et qui sert de support à la bobine d'un électro-aimant non représenté. Le noyau mobile 7 de cet électro-aimant traverse la pièce de raccordement et se termine par une tête de noyau formant ergot d'accrochage 8 qui se place dans une échancrure 9 prévue sur l'extrémité 5 du tiroir 3. Un ressort 10 est en outre intercalé entre un épaulement 11 prévu sur le tiroir 3 à proximité de l'échancrure 9, et un manchon 22 de guidage du noyau 7 interposé entre la pièce 6 et le corps de vanne 1. La partie centrale du tiroir 3 entre son extrémité cylindrique 4 et une autre partie cylindrique 15 voisine de l'épaulement 11, que toutes deux coulissent dans le puits 2, comporte une ouverture 12 qui traverse cette partie centrale du tiroir sur toute son épaisseur et qui est parallèle à l'axe AA'. La partie centrale entre les deux extrémités cylindriques 4 et 5 est également taillée selon un plan perpendiculaire au plan de l'ouverture 12, pour former un méplat 13 entre l'axe AA' et une génératrice du tiroir. Enfin transversalement à ce méplat et en son centre sont prévues deux encoches 14.

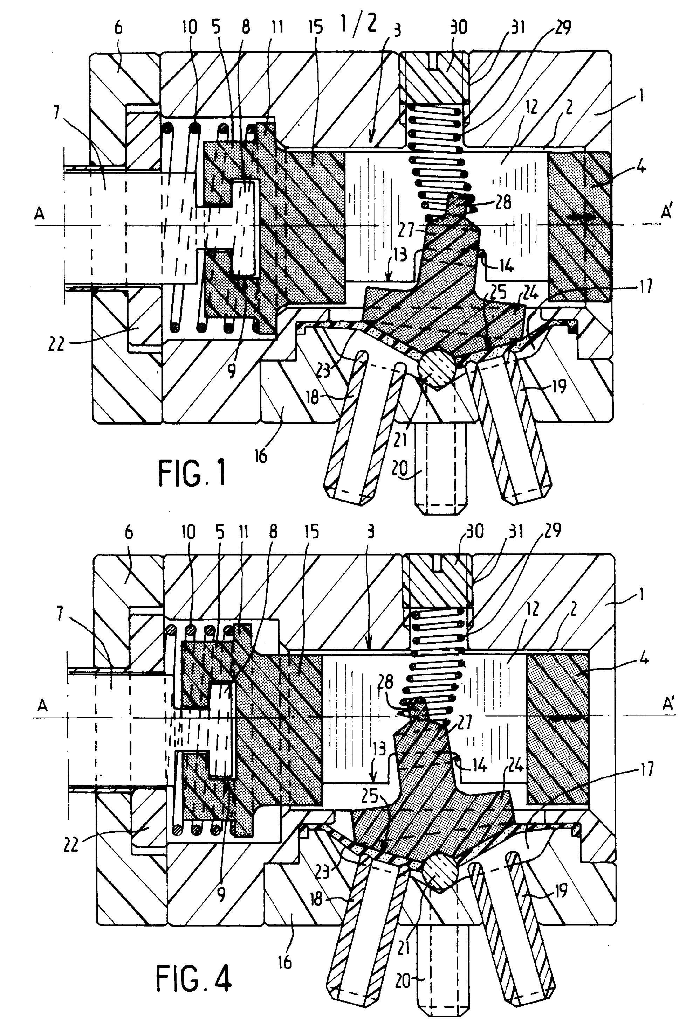

Une face latérale du corps de vanne 1 est en outre munie d'une ouverture cylindrique fermée par un flasque 16. Entre le flasque et les bords de l'ouverture du corps de vanne est pincée une membrane étanche 23 qui délimite avec ledit flasque une chambre de faible volume 17. Le flasque 16 est traversé par trois petits conduits d'alimentation ou de départ de fluide 18, 19 et 20. Chacun de ces petits conduits débouche dans ladite chambre 17. Deux conduits 18 et 19 s'ouvrent sur la chambre 17 à l'intérieur d'une couronne formant un relief sur le fond du flasque. Le troisième conduit 20 débouche directement sur le fond du flasque. On voit à la figure 1 que le flasque 16 a un profil bien particulier en forme de cuvette dont la partie centrale de profil conique reçoit une bille 21, interposée au centre de la membrane.

Selon une variante de réalisation non représentée la bille peut être solidaire du flasque 16 et obtenue directement par moulage de celui-ci, ainsi éventuellement que les conduits 18, 19 et 20.

La membrane 23, à cet effet, est percée d'un petit orifice central. Entre la membrane 23 et le méplat 13 du tiroir 3, est ménagé un volume libre dans le puits 2, qui sert de logement à un basculeur 24. La basculeur 24 représenté également à la figure 3 a la forme générale d'une toupie dont la face inférieure conique 25 est collée sur la face supérieure de la membrane 23. La membrane présente donc un profil analogue à cette face 25 et en fonction de l'orientation de cette dernière, se déforme comme cela apparaîtra plus loin. Cette face 25 dispose d'une alvéole centrale permettant le positionnement du basculeur sur la bille. Ledit basculeur comporte également, du côté opposé à sa face conique 25, une traverse 26 qui vient se loger dans les encoches 14. Au-dessus de cette traverse une tige 27 du basculeur est engagée dans l'ouverture 12 prévue sur le tiroir et se termine par un ergot 28.

Selon des variantes de réalisation non représentées, la membrane et le basculeur peuvent être réalisé en une seule pièce venant au moulage.

On voit à la figure 1 qu'un ressort 29 prend appui sur la tige 27, et se développe à l'intérieur de l'ouverture 12 du tiroir 3 jusqu'à une butée réglable 30 localisée dans un orifice fileté 31 prévu sur une face latérale du corps de vanne 1, opposée à la chambre 17. La traverse 26 logée avec un faible jeu à l'intérieur des encoches 14 permet au basculeur de prendre une certaine inclinaison par rapport à un plan perpendiculaire à l'axe AA', en fonction de la position du tiroir 3. Le ressort 29 exerce donc une pression sur l'extrémité de la tige 27, inclinée par rapport à ce plan, et en quelque sorte verrouille le basculeur 24 dans sa position. A la place du ressort on pourrait aussi utiliser une lamelle élastique remplissant la même fonction.

L'électrovanne représentée fonctionne de la façon suivant :

Dans la position repos illustré à la figure 1, l'électro-aimant n'est pas excité et sous l'action du ressort 10, le tiroir 3 est maintenu déplacé vers la droite, son extrémité 4 affleurant l'ouverture du puits 2. Le basculeur 24 est incliné vers la droit de telle sorte que la membrane 23 obture le conduit 19 mais libère le conduit 18. Le fluide admis dans la chambre 17 par le conduit 20 passe librement vers le conduit 18. La pression d'appui exercée par le ressort 29 sur la tige 28 se répercute sur la face 25 du basculeur du côté du conduit 19, la membrane s'écrasant sur la couronne dudit conduit pour maintenir une excellent étanchéite. Dès que l'électro-aiment est excité, le noyau 7 exerce une traction sur l'extrémité 5 du tiroir 3 par l'intermédiaire de sa tête d'accrochage 8, à l'encontre de la force du ressort 10. Le tiroir 3 se déplace alors pour occuper la position représentée à la figure 4. Au cours de ce mouvement les bords des encoches 14 ont attaqué le bord de la traverse 26 et entraîné le pivotement du basculeur 24. L'ergot 28 de l'extrémité 27 dudit basculeur s'est déplacé à l'intérieure du ressort 29 qui lui-même a basculé vers la gauche. Dès que le basculeur a dépassé une position intermédiaire selon un plan perpendiculaire à l'axe AA', le ressort 29 a accentué ce mouvement de basculement, rendu possible par le jeu subsistant entre les encoches 14 et la traverse 26. De ce fait et rapidement la membrane 23 s'est déformée en suivant l'inclinaison du basculeur; elle se dégage alors du conduit 19 et se plaque sur le conduit 18. La communication de fluide est alors établie entre le conduit 20 et le conduit 19. La membrane pouvant ainsi s'écraser sur son siège, il n'y a pas de risque de mauvaise fermeture due aux impuretés. La commutation est rapide et franche du fait du basculeur 24, qui passe de la première position d'équilibre illustrée à la figure 1 à la seconde position d'équilibre illustrée à la figure 4, chacune correspondant à une des deux positions possibles de la membrane.

Dès que cesse l'excitation de l'électro-aimant, le ressort 10 repousse le tiroir 3 dans la position originale de la figure 1. Il y a verrouillage automatique de commutation dans cette position. On notera que l'usager peut aussi agir lui-même pour manoeuvrer le tiroir en appuyant sur l'extrémité 4 qui affleure sur un côté de l'électrovanne, c'est-à-dire que la vanne reste utilisable manuellement en cas de défaillance de l'électro-aimant.

Le chambre 17 entre la membrane 23 et le flasque 16 étant de petite dimension, le volume mort de fluide est peu important ce qui rend le rinçage facile. En outre la membrane unique joue non seulement le rôle de clapet de fermeture sur son siège mais assure également une parfaite étanchéité avec le milieu extérieur et avec le puits intérieur 2 dans lequel coulisse le tiroir 3. Cette étanchéité est assurée aussi bien pour des liquides sous pression que pour les fluides gazeux à forte ou faible pression, voire au vide. L'encombrement du corps de vanne 1 est réduit sans pour autant réduire la section de passage du fluide par les conduits 18, 19 et 20.

Du fait du jeu subsistant entre le tiroir 3 et le basculeur 24, au niveau des encoches 14, il n'y a pas de rigidité entre la commande de l'électro-aimant et le système obturateur, donc pas de risque de déréglage. En outre la force de fermeture de la membrane sur l'un ou l'autre des sièges est réglable à l'aide de la butée 30 indépendamment de la force d'attraction de l'électro-aimant. Du fait que le basculeur 24 est attaqué par les encoches du tiroir 3 à un niveau élevé par rapport à son point de pivotement matérialisé par la bille 21, le bras de levier est tel que la force d'attraction du noyau 7 et par conséquent la puissance de l'électro-aimant, peut être faible alors que la force de fermeture de la membrane est forte.

De plus grâce à cette disposition particulière de montage le remplacement du système du commutation et de la membrane est possible par l'extérieur sans nécessiter obligatoirement le démontage de la vanne dans le matériel où elle est utilisée.

Ces avantages font que ces microvannes de commutation peuvent être montées et fixées en batterie dans un espace restreint, les conduits disposées d'un même côté facilitant leur implantation. Elle sont avantageusement réalisées en matériaux susceptibles de résister aux fluides agressifs et trouvent une application préférentielle dans les matériels d'analyses médicales mais aussi dans les industries alimentaires et autre.

Selon notamment une variante de réalisation non représentée le tiroir 3 pourrait être remplacé par un mécanisme par exemple du genre à ressort apte à assurer de façon analogue le mouvement du basculeur.

## Revendications

1. Microélectrovanne de commutation à au moins deux voies comportant un corps de vanne (1) dans une alvéole duquel aboutissent des conduits d'arrivée et de départ de fluide (18,19,20), et un organe mobile (23,24) constitué d'une membrane unique déformable jouant le rôle d'obturateur de l'un ou l'autre de ces conduits et manoeuvré par le noyau (7) d'un électro-aimant, caractérisé par le fait qu'un basculeur (24) pivotant autour d'un point de pivotement (21) disposé au centre de la membrane unique (23) applique ladite membrane, grâce à un ressort (29), soit contre un conduit (18), soit contre l'autre conduit (19), et par le fait qu'il est déplacé de l'une à l'autre de ses deux seules positions d'équilibre correspondant aux deux positions d'obturation de la membrane par un tiroir de commande (3) coulissant sous l'action du noyau (7) de l'électro-aimant, lequel tiroir étant placé dans un puits (2) traversant le corp de vanne (1) selon son axe longitudinal AA', une de ses extrémités (4) affleurant à un orifice de sortie, non obturé, dudit puits (2).

2. Microélectrovanne selon la revendication 1, caractérisé en ce que l'autre orifice de sortie du puits (2) du côté du noyau est fermé par une pièce de raccordement (5) renfermant un manchon (22) de guidage du noyau.

3. Microélectrovanne selon la revendication 1, caractérisée en ce que l'extrémité (5) du tiroir de commande (3), du côté du noyau (7) porte une échancrure (9) recevant l'ergot d'accrochage (8) dudit noyau.

4. Microélectrovanne selon la revendication 1 et 2, caractérisée en ce que du côté du noyau (7) un ressort (10) est intercalé entre un épaulement (11) prévu sur le tiroir (3) et le manchon (22).

5. Microélectrovanne selon la revendication 1, caractérisée en ce que la partie centrale du tiroir (3) comporte une ouverture (12) qui la traverse sur toute son épaisseur parallèlement à l'axe AA'.

6. Microélectrovanne selon la revendication 5, caractérisée en ce que la partie centrale du tiroir (3) est taillée selon un plan perpendiculaire au plan de l'ouverture (12) pour former un méplat (13) entre l'axe AA' et une génératrice du tiroir.

7. Microélectrovanne selon la revendication 6, caractérisée en ce que deux encoches (14) sont prévues transversalement au méplat (13) et en son centre.

8. Microélectrovanne selon la revendication 1, comportant un flasque profilé qui ferme une ouverture cylindrique prévue sur une face latérale du corps de vanne et qui est traversé par les trois petits conduits d'alimentation ou de départ de fluide (18,19,20), caractérisée en ce que le flasque (16) a un profil en forme de cuvette dont la partie centrale de profil conique reçoit une bille (21).

9. Microélectrovanne selon les revendications 1,5 et 8, caractérisée en ce que le basculeur (24) a la forme générale d'une toupie, dont la face inférieure conique (25) est en appui sur la face supérieure de la membrane (23) sous l'action du ressort (29) et pivote sur la bille (21), et dont la partie supérieure comporte une tige (27) qui s'engage dans l'ouverture (12) prévue sur le tiroir (3).

10. Microélectrovanne selon la revendication 9, caractérisée en ce que la face conique (25) du basculeur (24) est collée sur la face supérieure de la membrane (23).

11. Microélectrovanne selon la revendication 9, caractérisée en ce que la face conique (25) du basculeur (24) dispose d'une alvéole centrale permettant le positionnement du basculeur sur la bille.

12. Microélectrovanne selon les revendications 7 et 9, caractérisée en ce que le basculeur (24) comporte du côté opposé à sa face conique (25), une traverse (26) destinée à se loger dans les encoches (14) du tiroir (3).

13. Microélectrovanne selon la revendication 9, caractérisée en ce que le ressort (29) traverse l'ouverture (12) et prend appui sur une butée réglable (30) prévue sur une autre face latérale du corps de vanne (1).

**Patentansprüche**

1. Elektrisches Mikro-Umschaltventil auf wenigstens zwei Wege mit einem Ventilkörper (1) in einer Kammer, an der Flüssigkeits-Zu- und -Ablaufleitungen (18,19,2o) enden, und mit einem bewegbaren Steuerteil (23,24), das seinerseits mit einer einzigen verformbaren Membran versehen ist, die die Abdeckung für die eine oder die andere Leitung bildet, und die von dem Anker (7) eines Elektromagneten bewegt werden kann, dadurch gekennzeichnet, daß ein Kippelement (24), das um einen Angelpunkt (21) schwenkbar im Mittelpunkt der einzigen Membran (23) angebrach ist und dank einer Druckfeder (29) die gennante Membran gegen die eine (18) oder die andere Leitungsmündung (19) andrücken kann, und daß es von der einen zu der anderen seiner beiden einzigen Gleichgewichtsstellungen entsprechend den beiden Schlißstellungen der Membran durch einen Steuerschieber (3) verlagert werden kann, der unter der Wirkung des Elektromagneten gleitbar in einer Ausnehmung (2) angebracht ist, die den Ventilkörper (1) entlang seiner Längsache AA' durchquert, wobei eines der seiner Ende (4) auf eine unverschlossene Ausgangsöffnung der genannten Ausnehmung zuläuft.

2. Mikro-Umschaltventil nach Anspruch 1, dadurch gekennzeichnet, daß die andere Öffnung des Ausnehmungsausganges (2) an der Seite des Ankers (7) durch ein Stück der Klammer-Verbindung (5) abgeschlossen ist, die auch einen Führungsmuffe (22) für den Anker abschließt.

3. Mikro-Umschaltventil nach Anspruch 1, dadurch gekennzeichnet, daß das Ende (5) des Steuerschiebers (3) an der Seite des Ankers (7) eine Aussparung (9) aufweist, die die Eingriffs-Klaue (8) für die Klammer-Verbindung des Ankers bildet.

4. Mikro-Umschaltventil nach den Ansprüchen 1 und 2, dadurch gekennzeichnet, daß an der Seite des Ankers (7) eine Feder (1o) zwischen einer Schulter (11) auf dem Steuerschieber (3) und der Muffe (22) vorgesehen ist.

5. Mikro-Umschaltventil nach Anspruch 1, dadurch gekennzeichnet, daß der mittlere Teil des Steuerschiebers (3) eine Öffnung (12) aufweist, die den Schieber auf seiner ganzen Dicke parallel zur Achse AA′ durchquert.

6. Mikro-Umschaltventil nach Anspruch 5, dadurch gekennzeichnet, daß der Mittelteil des Schiebers (3) in einer zur Ebene der Öffnung (12) senkrechten Ebene derart ausgebildet ist, daß eine Abflachung (13) zwischen der Achse AA′ und einer Erzeugenden des Schiebers entsteht.

7. Mikro-Umschaltventil nach Anspruch 6, dadurch gekennzeichnet, daß zwei Nuten (14) quer zu Abflachung und in ihrer Mitte vorgesehen sind.

8. Mikro-Umschaltventil nach Anspruch 1, dadurch gekennzeichnet, daß es einen flanschartig profilierten Gehäusedeckel umfaßt, der eine zylindrische Öffnung abschließt, die an einer Seitenfläche des Ventilkörpers vorgesehen ist und die von drei kleinen Flüssigkeitszulauf-oder Abgangsleitungen (18, 19,2o) durchstoßen wird dadurch gekennzeichnet, daß der Flansch (16) ein muldenartiges Profil hat, dessen Mittelteil mit konischem Profil eine Kugel (21) aufnimmt.

9. Mikro-Umschaltventil nach Ansprüchen 1,5 und 8, dadurch gekennzeichnet, daß das Kippelement in der allgemeinen Form eines Kreisels (24), dessen untere konische Fläche auf der Oberfläche einer Membran (23) anliegt unter der Wirkung einer Feder (29) und um die Kugel (21) schwenkbar ist und dessen oberer Teil einen Zapfen (27) aufweist, der in die auf dem Schieber (3) vorgesehen Öffnung eingreift.

10. Mikro-Umschaltventil nach Anspruch 9, dadurch gekennzeichnet, daß die konische Fläche (25) des Kipp-Elementes (24) mit der Oberfläche der Membran (23) verklebt ist.

11. Mikro-Umschaltventil nach Anspruch 9, dadurch gekennzeichnet, daß die konische Fläche (25) des Kipp-Elementes (24) über einen zentralen Raum verfügt, der ermöglicht, daß sie den vorgesehen Raum zum Kippen auf der Kugel einnehmen kann.

12. Mikro-Umschaltventil nach Ansprüchen 7 und 9, dadurch gekennzeichnet, daß das Kipp-Element (24) gegenüber seiner konischen Fläche (25) eine Traverse (26) aufweist, die in den Rasten (14) des Schiebers (3) aufgenommen werden kann.

13. Mikro-Umschaltventil nach Anspruch 9, dadurch gekennzeichnet, daß die Feder (29) die Öffnung (12) durchstößt und an einem verstellbaren Anschlag (3o) zur Anlage kommt, der auf einer anderen Seitenfläche des Ventilkörper (1) vorgesehen ist.

## Claims

1. Switching microelectrovalve having at least two ways, comprising a valve body (1) in a compartment of which terminate fluid inlet and outlet pipes (18, 19, 20), and a movable member (23, 24) constituted by a single deformable membrane performing the function of closing device of the one or the other of these pipes, said member being actuated by the core (7) of an electromagnet, characterised by the fact that a rocker (24) pivoting about a pivot point (21) disposed at the centre of the single membrane (23) applies said membrane, by means of a spring (29), either against one pipe (18), or against the other pipe (19), and by the fact that it is displaced from the one to the other of its only two positions of equilibrium corresponding to the two closure positions of the membrane by a control slide (3) sliding under the action of the core (7) of the electromagnet, said slide being placed in a well (2) passing through the valve body (1) along its longitudinal axis AA′, one of its ends (4) being flush with a non-closed outlet aperture of said well (2).

2. Microelectrovalve according to Claim 1, characterised in that the other outlet aperture of the well (2) in the direction of the core (7) is closed by a connecting part (6) enclosing a sleeve (22) for guiding of the core.

3. Microelectrovalve according to Claim 1, characterised in that the end (5) of the control slide (3), in the direction of the core (7) bears an indentation (9) receiving the coupling pin (8) of said core.

4. Microelectrovalve according to Claims 1 and 2, characterised in that in the direction of the core (7) a spring (10) is inserted between a step (11) provided on the slide (3) and the sleeve (22).

5. Microelectrovalve according to Claim 1, characterised in that the central part of the slide (3) comprises an opening (12) which passes through it over its entire thickness parallel with the axis AA′.

6. Microelectrovalve according to Claim 5, characterised in that the central part of the slide (3) is cut along a plane perpendicular to the plane of the opening (12) so as to form a flat part (13) between the axis AA′ and a generating line of the slide.

7. Microelectrovalve according to Claim 6, characterised in that two slots (14) are provided transversely to the flat part (13) and at its centre.

8. Microelectrovalve according to Claim 1, comprising a profiled side plate which closes a cylindrical opening provided on a lateral face of the valve body and through which pass the three small fluid supply or outlet pipes (18, 19, 20), characterised in that the side plate (16) has a dished profile the central part of which, of conical profile, receives a ball (21).

9. Microelectrovalve according to Claims 1, 5 and 8, characterised in that the rocker (24) has the general shape of a top, the lower conical face (25) of which bears against the upper face of the membrane (23) under the action of the spring (29) and pivots on the ball (21), and the upper part of which comprises a shank (27) which fits into the opening (12) provided on the slide (3).

10. Microelectrovalve according to Claim 9, characterised in that the conical face (25) of the rocker (24) is bonded onto the upper face of the membrane (23).

11. Microelectrovalve according to Claim 9, characterised in that the conical face (25) of the rocker (24) has a central compartment permitting the positioning of the rocker on the ball.

12. Microelectrovalve according to Claims 7 and 9, characterised in that the rocker (24) comprises on the side opposite to its conical face (25), a cross-piece (26) intended to be set in the slots (14) of the slide (3).

13. Microelectrovalve according to Claim 9, characterised in that the spring (29) passes through the opening (12) and bears against an adjustable stop (30) provided on another lateral face of the valve body (1).

FIG. 1

FIG. 4

FIG. 2

FIG. 3